# EUROPÄISCHE PATENTSCHRIFT

(11) **EP 0 477 695 B1**
(45) Veröffentlichungstag und Bekanntmachung des Hinweises auf die Patenterteilung: **19.04.1995**
(21) Anmeldenummer: 91115524.0
(22) Anmeldetag: 13.09.1991
(51) Int. Cl.: B65G 69/00

(54) **Verformbare Dichtung des Spaltes zwischen dem Rand einer Gebäudeöffnung und dem Heck eines an diese herangefahrenen Fahrzeuges**
Flexible sealing of the gap between the edge of an opening in a building and the tail of a vehicle drawn up to the same
Etanchement déformable pour la fente entre lebord d'une ouverture de bâtiment et l'arrière d'une véhicule s'y approchant

(30) Priorität: 25.09.1990 DE 4030266
(43) Veröffentlichungstag der Anmeldung: 01.04.1992
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- DE-A- 3 020 065
- DE-A- 3 631 591
- US-A- 2 681 698

## Beschreibung

Die Erfindung betrifft eine verformbare Dichtung des Spaltes zwischen dem Rand einer Gebäudeöffnung und dem Heck eines an diese herangefahrenen Fahrzeuges mit einer lappigen, verformbaren Schürze aus zwei zu beiden Seiten der Gebäudeöffnung angeordneten senkrechten Streifen und einem im Bereich der oberen Streifenenden vor den Streifen befindlichen Querteil, das an einem Querträger aufgehängt ist, von dem aus sich zum Gebäude hin eine Dachplane erstreckt, wobei die beiden Streifen an einem am Gebäude befestigten nachgiebigen Tragkörper befestigt sind und die Dachplane mit seitlichen Verlängerungen in Form eines den oberen Abschnitt der Tragkörper überdeckenden, frei herabhängenden Überhanges versehen ist.

Die den Überhang bildende Verlängerung zu beiden Seiten der Dachplane hat im allgemeinen die Aufgabe, den Spalt zwischen der Dachplane einerseits und den seitlichen Tragkörpern für die senkrechten Streifen bzw. den seitlichen Abdeckplanen andererseits abzudecken. Aus der DE-A-36 31 591 ist für eine Dichtung der eingangs genannten Art bekannt, die Überhänge frei herabhängen zu lassen. Das quer über der Gebäudeöffnung angeordnete Dachteil ist bei dieser Dichtung durch eine starre Befestigung mit der Gebäudewand verbunden.

Eine starre Befestigung des Dachteils ist jedoch von Nachteil, wenn z.B. höhere Fahrzeuge andocken, oder das andockende Fahrzeug Hubbewegungen ausführt, wie dies beim Absetzen von Sattelschelpperanhängern eintritt. Die Dichtung kann hierbei beschädigt oder gar ganz zerstört werden.

Bei einem Dachteil, das nicht starr an der Gebäudewand befestigt ist, sondern stattdessen so ausgeführt ist, daß es den Hubbewegungen andockender Fahrzeuge folgen kann, können sich bei den erwähnten frei herabhängenden Überhängen aufgrund von Witterungsbedingungen Schwierigkeiten ergeben, da Relativbewegungen zwischen Dachplane und den seitlichen Abdeckplanen bzw. Tragkörpern entstehen bzw. gewollt entstehen sollen. In diesen Fällen kann es z.B. durch Windeinwirkungen zu unerwünschten Lageveränderungen der Verlängerungen kommen.

Aufgrund der Erfindung sollen diese Nachteile beseitigt und demgemäß erreicht werden, daß das Oberteil der Dichtung den Hubbewegungen eines andockenden Fahrzeuges folgen kann und daß dabei die frei herabhängenden Verlängerungen der Dachplane auch dann ihre vorgeschriebenen Stellung wieder einnehmen, wenn zwischen der Verlängerung und den Seitenteilen der Dichtung Relativbewegungen eintreten.

Diese Aufgabe wird erfindungsgemäß dadurch gelöst, daß der Querträger zusammen mit der Dachplane, dem Querteil und den Überhängen hebbar ist und die Überhänge randbeschwert sind sowie eine im Vergleich zum Hub des Querträgers größere Länge aufweisen. Die Überhänge erhalten für die Randbeschwerung zweckmäßigerweise an ihren Enden Schlaufen, in die Stäbe z.B. aus Stahl eingeführt werden.

Es somit nur erforderlich, an den Enden der Verlängerung eine Beschwerung in Form der vorgenannten Stäbe vorzusehen, um die eingangs erwähnten Mängel der unerwünschten Lageveränderung der Verlängerung nicht in Kauf nehmen zu müssen. Die Schlaufen können dabei durch eine Doppelung der Enden der Verlängerung herbeigeführt werden, wobei dann die Schlaufenform durch eine Naht od. dgl. sichergestellt wird.

Weitere Einzelheiten der Erfindung werden anhand der Zeichnung erläutert, in der ein Ausführungsbeispiel der Erfindung dargestellt ist.

Es zeigen :

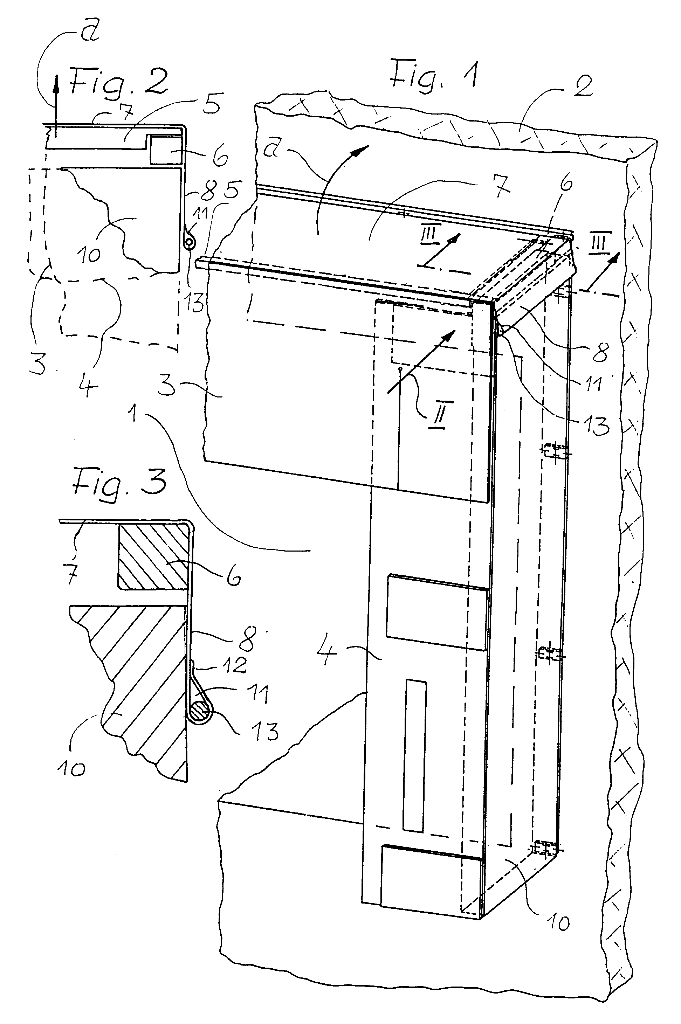

- Fig. 1: die rechte Hälfte einer am Rand einer Gebäudeöffnung befindlichen verformbaren Dichtung in schaubildlicher Darstellung,
- Fig. 2: eine Teilansicht in Richtung des Pfeiles II gemäss Fig. 1 gesehen und
- Fig. 3: einen Teilschnitt nach der Linie III - III von Fig. 1.

Der Gebäudeöffnung 1 des Gebäudes mit der Wandung 2 kann ein Sektionaltor od. dgl. zugeordnet sein; vor dieser Gebäudeöffnung 1 befindet sich die verformbare Dichtung gemäss Erfindung, die den Spalt zwischen dem Rand der Gebäudeöffnung 1 und einem andockenden Fahrzeug überbrücken und abdichten soll.

Aus diesen Gründen ist im Abstand von der Wandung 2 eine verformbare Schürze angeordnet, die aus einem oben gelegenen Querteil 3 und zwei zu beiden Seiten der Gebäudeöffnung 1 befindlichen senkrechten Streifen 4 besteht. Die Teile 3, 4 bestehen aus einem verformbaren, zugfesten Material z.B. aus Gewebe, das mit Kunststoff oder Gummi behandelt ist. Die so aufgebaute Schürze soll sich der Kontur des Fahrzeuges anpassen können.

Das Querteil 3 ist gardinenartig am oberen Rand an einem aus Stahl od. dgl. bestehenden Querträger 5 aufgehängt. Von ihm aus erstreckt sich eine Dachplane 7 nach hinten; sie ist aussen an der Wandung 2 verankert. Die Enden des Querträgers 5 liegen lose auf dem freien Ende eines an der Wandung 2 befestigten waagerechten Armes 6, zudem ist der Querträger 5 durch sich nach hinten erstreckende Lenker um eine in der Nähe der Wandung 2 gelegene waagerechte Achse verschwenkbar, um so eine Verschwenkung im Sinne des Pfeiles a herbeiführen zu können, wobei der vordere Teil der Dachplane 7, der Querträger 5 und das Querteil 3 eine Hubbewegung ausführen, um z.B. höhere Fahrzeuge andocken oder Hubbewegungen andockender Fahrzeuge durchführen zu können, ohne die Dichtung zu beschädigen.

Die zu beiden Seiten der Gebäudeöffnung 1 befindlichen und oben hinter dem Querteil 3 befindlichen Streifen 4 sind am freien Ende von an der Wandung 2 befestigten Tragkörpern befestigt, die mit 1o bezeichnet sind und in Richtung auf das Gebäude elastisch nachgiebig verformt werden können.

Um im Bereich der oberen aussen gelegenen Ecken der Dichtung eine ausreichende Abdichtung zu erreichen, ist die Dachplane 7 an beiden seitlichen Enden mit einer Verlängerung 8 versehen, die das obere Ende der Tragkörper 10 überdeckt und frei herabhängt. Die Verlängerung 8 ist an ihrem freien Ende durch Doppelung des Werkstoffes zu einer Schlaufe 11 geformt, die durch eine Naht oder Klebestelle bei 12 sichergestellt wird. In diese Schlaufe 11 ist zur Beschwerung und Versteifung ein Stab 13 aus Stahl od. dgl. eingeführt und gehalten.

Durch diese Massnahme der Randbeschwerung behält der Überhang bzw. die Verlängerung 8 auch bei Wind und Wetter seine Gestalt; der Querträger 5 kann ohne weiteres im Sinne des Pfeiles a bewegt und wieder in die dargestellte Ruhelage zurückgeführt werden, ohne Verwerfungen oder Verklemmungen der Verlängerung 8 befürchten zu müssen.

Die Länge des Überhangs 8 ist so bemessen, daß sie größer ist als der Hub des Querträgers 5 im Falle einer Hubbewegung.

## Patentansprüche

1. Verformbare Dichtung des Spaltes zwischen dem Rand einer Gebäudeöffnung und dem Heck eines an diese herangefahrenen Fahrzeuges mit einer lappigen, verformbaren Schürze aus zwei zu beiden Seiten der Gebäudeöffnung angeordneten senkrechten Streifen (4) und einem im Bereich der oberen Streifenenden vor den Streifen (4) befindlichen Querteil (3), das an einem Querträger (5) aufgehängt ist, von dem aus sich zum Gebäude hin eine Dachplane (7) erstreckt, wobei die beiden Streifen (4) an einem am Gebäude befestigten nachgiebigen Tragkörper (10) befestigt sind und die Dachplane (7) mit seitlichen Verlängerungen (8) in Form eines den oberen Abschnitt der Tragkörper (10) überdeckenden, frei herabhängenden Überhanges versehen ist, dadurch gekennzeichnet, dass der Querträger (5) zusammen mit der Dachplane (7), dem Querteil (3) und den Überhängen (8) hebbar ist und die Überhänge (8) randbeschwert sind sowie eine im Vergleich zum Hub des Querträgers (5) grössere Länge aufweisen.

2. Dichtung nach Anspruch 1, dadurch gekennzeichnet, dass die Überhänge (8) durch einen in eine Randschlaufe (11) eingeführten Stab (13) randbeschwert sind.

3. Dichtung nach Anspruch 1 und 2, dadurch gekennzeichnet, dass der Querträger (5) zusammen mit der Dachplane (7), dem Querteil (3) und den Überhängen (8) um eine in der Gebäudenähe befindliche waagerechte Achse verschwenkbar ist.

4. Dichtung nach Anspruch 3, dadurch gekennzeichnet, dass der Querträger (5) zusammen mit der Dachplane (7), dem Querteil (3) und den Überhängen (8) durch am Querträger (5) angreifende Lenker verschwenkbar ist.

## Claims

1. Deformable seal for sealing the gap between the edge of a building opening and the rear of a vehicle which has been driven up to said opening, having a soft, deformable apron formed from two vertical strips 4, which are disposed on both sides of the building opening, and a transverse member (3), which is situated in front of the strips (4) in the region of the upper strip ends and is mounted on a transverse support (5), from which a top cover (7) extends towards the building, the two strips (4) being secured to a resilient supporting body (10), which is secured to the building, and the top cover (7) being provided with lateral extensions (8) in the form of an overhang, which covers the upper portion of the supporting body (10) and hangs freely downwardly, characterised in that the transverse support (5) is raisable, together with the top cover (7), the transverse member (3) and the overhangs (8), and the overhangs (8) are weighted at their edge and have a length which is greater than the lifting movement of the transverse support (5).

2. Seal according to claim 1, characterised in that the overhangs (8) are edge-loaded by a rod (13), which is inserted into an edge loop (11).

3. Seal according to claims 1 and 2, characterised in that the transverse support (5), together with the top cover (7), the transverse member (3) and the overhangs (8), is pivotable about a horizontal axis situated in the vicinity of the building.

4. Seal according to claim 3, characterised in that the transverse support (5), together with the top cover (7), the transverse member (3) and the overhangs (8), is pivotable by means of a guide member which cooperates with the transverse support (5).

## Revendications

1. Dispositif d'étanchéité déformable de l'intervalle compris entre le bord d'une baie de bâtiment et l'arrière d'un véhicule automobile qui s'en approche comportant une jupe flasque, déformable constituée de deux bandes (4) verticales montées de par et d'autre de la baie du bâtiment et une pièce (3) transversale se trouvant dans la région des extrémités supérieures des bandes, devant les bandes et qui est suspendue à une traverse (5) à partir de laquelle une bâche (7) de couverture s'étend jusqu'au bâtiment, les deux bandes (4) étant fixées à une pièce (10) de support flexible fixée au bâtiment et la bâche (7) de couverture étant munie de prolongements (8) latéraux en forme d'un pan couvrant le segment supérieur de la pièce (10) de support et pendant librement, caractérisé en ce que la traverse (5) peut être levée en même temps que la bâche (7) de couverture, la pièce (3) transversale et les pans (8) et en ce que les pans (8) sont lestés sur le bord et qu'ils sont d'une longueur plus grande que la course de la traverse (5).

2. Dispositif d'étanchéité suivant la revendication 1 caractérisé en ce que les pans (8) sont lestés sur le bord par une barre enfilée dans un crochet (11) fermé situé sur le bord.

3. Dispositif d'étanchéité suivant les revendications 1 ou 2 caractérisé en ce que la traverse (5) peut être tournée en même temps que la bâche (7) de couverture, la pièce (3) transversale et les pans (8) autour d'un axe horizontal à proximité du bâtiment.

4. Dispositif d'étanchéité suivant la revendication 3 caractérisé en ce que la traverse (5) peut être tournée en même temps que la bâche (7) de couverture, la pièce (3) transversale et les pans (8) par un bras articulé attaquant la traverse (5).
